# EUROPÄISCHE PATENTANMELDUNG

(11) **EP 1 281 889 A1**
(43) Veröffentlichungstag der Anmeldung: **05.02.2003**
(21) Anmeldenummer: 01118656.6
(22) Anmeldetag: 03.08.2001
(51) Int. Cl.: F16F 15/02

(54) **Verfahren zum Erfassen eines Schwingungsisolationssystems**

(71) Anmelder: Heiland, Peter, 65479 Raunheim (DE)
(72) Erfinder: Heiland, Peter, 65479 Raunheim (DE)
(74) Vertreter: Blumbach, Kramer & Partner GbR

(57) **Zusammenfassung**

Indem in bezug auf ein Schwingungsisolationssystem, welches wenigstens eine einem Isoloationskörper zuordenbare Schwingungsisolationseinrichtung umfasst, ein Verfahren zum Erfassen des Systems mit Hilfe einer Regel- und/oder Steuereinrichtung bereitgestellt wird, in dem eine Regel- und/oder Steuerstruktur vorgegeben werden kann, und in dem von mit dem Isolationssystem in Beziehung stehender Signale und/oder Größen aufgenommen, verarbeitet und/oder bereitgestellt werden, und in dem auf der Basis der definierbaren Strukturen und Größen wenigstens ein isolationssystem-charakteristischer Datensatz zur Bewertung des Schwingungsisolationssystems gebildet wird, werden erstmals die wegweisenden Grundlagen für ein offenes Auswerte-, Regel- und Steuersystem geschaffen.

## Beschreibung

Die Erfindung betrifft ein Verfahren zum Erfassen eines Schwingungsisolationssystems gemäß Anspruch 1, einem Computerprogramm zur Durchführung des Verfahren auf einem Computer nach Anspruch 34, einer Vorrichtung zur Durchführung des Verfahren und zur Ausführung des Computerprogramms nach Anspruch 42 und einem System zur Erfassung eines Schwingungsisolationssystems gemäß Anspruch 46.

Es sind Verfahren zur Schwingungsisolation bekannt, bei denen auf der Basis eines im wesentlichen fest vorgegeben Parametersatzes die Regelung eines Schwingungsisolationssystems erfolgt. Als problematisch bei der Schwingungsisolation bestehender Systeme haben sich insbesondere die fehlenden oder unzureichenden Möglichkeiten zur Überwachung oder Diagnose, d.h. das Nicht-Vorhandsein einer Fehlererkennung und Behebung am Schwingungsisolationssystems gezeigt.

Bekannte Verfahren, Computerprogramme und Vorrichtungen zur Schwingungsisolation weisen ferner den Nachteil auf, dass sie kaum Schnittstellen anbieten, über die z.B. Diagnosedaten auf einfache Art und Weise abgegriffen, verarbeitet und dem Anwender zur Verfügung gestellt werden bzw. werden können.

Die schwere Zugänglichkeit von Daten behindert jedoch nicht nur die Überwachung des Schingungsisolationssystems sondern auch eine flexible Anpassung desselben an neu oder nicht vorhersehbare Zustände oder Situationen.

Aufgabe der Erfindung ist es deshalb ein offenes System zur Erfassung und/oder Bewertung eines Schwingungsisolationssystems bereitzustellen.

Gelöst wird diese Aufgabe nach der Erfindung unter anderem auf höchst überraschende Weise bereits durch die Merkmale des Anspruchs 1. Ferner wird zur Lösung ein System nach Anspruch 46 angegeben, welches das Verfahren, das Computerprogramm mit den Merkmalen nach Anspruch 34 und die Vorrichtung mit den Merkmalen nach Anspruch 42 umfasst.

Vorteilhafte Weiterbildungen sind in den Unteransprüchen definiert.

Indem in bezug auf ein Schwingungsisolationssystem, welches wenigstens eine einem Isoloationskörper zuordenbare Schwingungsisolationseinrichtung umfasst, ein Verfahren zum Erfassen des Systems mit Hilfe einer Regel- und/oder Steuereinrichtung bereitgestellt wird, in dem eine Regelund/oder Steuerstruktur vorgegeben werden kann, und in dem von mit dem Isolationssystem in Beziehung stehender Signale und/oder Größen aufgenommen, verarbeitet und/oder bereitgestellt werden, und in dem auf der Basis der definierbaren Strukturen und Größen wenigstens ein isolationssystem-charakteristischer Datensatz zur Bewertung des Schwingungsisolationssystems gebildet wird, werden erstmals die wegweisenden Grundlagen für ein offenes Auswerte-, Regel- und Steuersystem geschaffen.

In diesem Sinne bietet das erfindungsgemäße Verfahren die Möglichkeit die bereitgestellte Regel- und Steuerstruktur in differenzierter Art und Weise auf individuelle Bedürfnisse anzupassen. Hierbei ist mit Vorteil vorgesehen, dass insbesondere im Rahmen des Bereitstellens der Regel- und/oder Steuerstruktur in flexibler Form das Bereitstellen von verschiedensten Regelkreisen vorgesehen ist. Auf diese Weise erlaubt das Verfahren das Festlegen diverser Regelungsarten wie z.B. die Rückkopplungs- und/oder Forwärtskopplungsreglung. Um darüber hinaus auch noch zeitliche Schwankungen im Isolationssystem ausgleichen zu können bietet die erfindungsgemäße Regel- und/oder Steuerstruktur auch die Möglichkeit des adaptiven Regelns, d.h. die Fähigkeit des Verfahrens der Selbstanpassung an z.B. Alterungsprozesse oder äußere Einflüsse.

Die Variabilität des Verfahrens kommt auch darin zum Ausdruck, dass im Verfahren, insbesondere beschleunigungsbestimmte und/oder geschwindigkeitsbestimmte und/oder positionsbestimmte Regelkreise in der Regel- und/oder Steuerstruktur insbesondere unabhängig voneinander selektiert und festlegt werden können. Entsprechende, und auf das Isolationssystem abgestimmte Stellglieder oder Aktoren und Regelgrößen oder Sensoren werden im erfindungsgemäßen Verfahren ebenfalls spezifiziert. Hierzu könne die Steuer- und Regelgrößen in der Regel- und Steuerstruktur insbesondere in bezug auf die Aktoren und Sensoren im einzelnen angegeben werden. Als Beispiele können hier Größen, wie insbesondere Grenzwerte für Überlastströme im Hinblick auf Motoren von Stellgeliedern genannt werden oder aber auch Regel- und Steuergrößen bezüglich eines pneumatischen Schwingungsisolationssystems.

Ferner steht in diesem Zusammenhang, dass nach der Erfindung mit Vorteil die Möglichkeit eröffnet wird die Regelkreise in sich und untereinander höchst differenziert abzustimmen. Mit sehr positiven Wirkungen wird somit eine Stabilisierung bzw. Selbststabilisierung des Schwingungsisolationssystems erreicht. Hierbei können beispielsweise Umschaltkriterien zwischen den Regelkreisen definiert werden oder einzelne Filter und/oder Verstärker beispielsweise mit Bezug auf Reglerverstärkungsfaktoren eingestellt werden. Daneben sei insbesondere noch die Möglichkeit angeführt, dass hinsichtlich jeder zu isolierenden Achse der Umfang des Einflusses bestimmt oder vorgegeben'werden kann, den die jeweiligen aufgenommenen Signale oder Sensorsignale auf die zu isolierende Achse haben oder haben sollen. Gleiches gilt auch für die Ausgangssignale zur Regelung der Stellgrößen.

Neben den bereits oben angegebenen Verfahrensteilen beinhaltet das Verfahren selbstverständlich auch das Regeln und/oder Steuern des Schwingungsisolationssystems, insbesondere auf der Basis der bereitgestellten Steuerstruktur und/oder mit Hilfe der Größen und/oder Signale und/oder des isolationssystem-charakteristische Datensatzes. Die Regelung und/oder Steuerung sowie die bereitgestellte Regel- und/oder Steuerstruktur bezieht sich dabei insbesondere und vor allem auf sämtliche bekannte und noch auszuführende erfindungsgemäße Aspekte der Schwingungsisolation und vorzugsweise auf sämtliche zur Verfügung stehenden bzw. zu isolierenden Freiheitsgrade.

Mithin ein wesentlicher Aspekt der Erfindung besteht insbesondere auch darin Schnittstellen verschiedenster Art bereitzustellen, um eine im wesentlichen optimale Datenverarbeitung zu ermöglichen. Dabei geht es vorzugsweise um Schnittstellen der Hardware und um solche der Software auf der Basis von Programm-Code-Mitteln und/oder um die Anpassung von Software an bestehende Hardware-Schnittstellen und um Benutzerschnittstellen. Die Schnittstellen dienen dabei zum einen zur Akquisition und zum Datenaustausch von Signalen bzw. Daten zwischen dem Schwingungsisolationssystem und der Regel- und/oder Steuereinrichtung aber auch zur internen Weiterleitung oder Weiterverarbeitung in der Regel- und/oder Steuereinrichtung und zum Datenaustausch Mensch-Maschine. Darüber hinaus ist erfindungsgemäß aber auch vorgesehen Schnittstellen bereitzustellen, die ein Zuführen von externen Signalen, z.B. Anregungssignalen für das Schwingungsisolationssystem, erlauben und solche die ein spezifisches Abgreifen von Signalen ermöglichen. Bei letzteren kann es sich beispielsweise um Stellgrößen/Stellsignale oder um Reglabweichungen in einer Regelschleife handeln. Als interne Schnittstellen in der Regel- und/oder Steuereinrichtung dienen vorzugsweise serielle Schnittstellen wie z.B. Schnittstellen die auf dem RS232-Standard beruhen.

Das erfingungsgemäße Verfahren schließt allerdings nicht nur das Bereitstellen von Schnittstellen ein, sondern auch deren Überwachung und/oder Steuerung und/oder Konfiguration im Hinblick auf den Datenaustausch. Hierbei wird zum Beispiel auch sichergestellt, dass eine parallele Schnittstelle nicht nur von einer Anwendung in der Regelund/oder Steuereinheit verwendet werden kann, sondern dass die Schnittstelle von einer Mehrzahl von Anwendungen gleichzeitig nutzbar ist. Darüber hinaus wird auch das parallele Arbeiten mit mehreren Schnittstellen gewährleistet. Zudem können Schnittstellen auch so angepasst werden, so dass eine Fernsteuerung des Schwingungsisolationssystems möglich ist. Letzteres kann nach der Erfindung beispielsweise durch das Bereitstellen einer DCOM-Funktionalität (Distributed Component Object Model functionality) ermöglicht werden.

Zur Sicherung der bereitgestellten Konfigurationsdaten der Regel- und/oder Steuerstruktur, der aufgenommenen Daten oder Signalen und der gebildeten Datensätze ist im Rahmen des Verfahrens mit Vorteil deren Aufzeichnung oder Speicherung bzw. Sicherung vorgesehen. Auf diese Weise bleiben die Informationen auch für spätere Anwendungen z.B. zum Vergleich und/oder zum Export erhalten.

In weiterer vorteilhafter Weiterbildung des erfindungsgemäßen Verfahrens beinhaltet dieses gleichfalls auch das Testen der Regel- und/oder Steuerstruktur. Dabei werden im Verfahren beispielsweise externe Anregungssignale über die bereitgestellten Schnittstellen und/oder Verarbeitungsschritte zur Testanregung des Schwingungsisolationssystems bereitgestellt bzw. eingespeist oder zum gleichen Zweck interne Anregungssignale erzeugt. Das Ergebnis der Testanregung wird in die Regel- und/oder Steuereinrichtung aufgenommen, weiterverarbeitet und festgehalten. Die Testanregungen können mit Vorteil nach der Erfindung im einzelnen konfiguriert und gespeichert werden. Als Beispiele seien hierzu das Spezifizieren der Anregung auf bestimmte Freiheitsgrade oder auf bestimmte Regelkreise genannt.

Ein weiterer wesentlicher und vorteilhafter Aspekt der Erfindung besteht auch darin, dass vielseitige Überwachungsfunktionen vorgesehen sind, die beispielsweise im Rahmen der Festlegung bzw. Konfiguration von Überwachungsoder Toleranzkriterien zu einer generellen oder permanenten Prüfung von Verfahrensschritten und/oder Parametern bzw. Größen z.B. in Form einer Hintergrundüberwachung eingesetzt werden können. Insoweit ist im Rahmen der Erfindung beispielsweise vorgesehen die Funktionsweise von Stellgliedern zu überwachen. Im speziellen können z.B. Temperaturen und Zustände von Stellmotoren und die Ausregelung einer pneumatischen Schwingungsisolationseinrichtung und der Stellversatz der dort eingesetzten Ventile überwacht werden. Ferner ist mit Vorteil die Überwachungsfunktion der Erfindung so ausgelegt, dass grundsätzlich sämtliche Regel- und Steuergrößen, wie z.B. Regelkreisabstimmungsgrößen, für eine Hintergrundüberwachung zugänglich sind. Die Erfindung beschränkt sich allerdings nicht auf eine übergeordnete generelle oder permanente Prüfung aller relevanter Schwingungsisolationsgrößen, vielmehr können Überwachungsbereiche differenziert selektiert werden, so dass z.B. die Überwachungsmöglichkeiten auch auf auswählbare Regelkreise und in diesen z.B. auf einzelne zu überwachendende Freiheitsgrade und hierbei wiederum auf zugeordnete Stellgrößen bezogen werden können. Einer weiteren Differenzierung der Überwachung steht im Rahmen der Erfindung nichts im Wege. Dabei sei auch darauf hingewiesen, dass die Selektion der Überwachungsdaten nicht nur in bezug auf quasi vertikaler Richtung besteht - siehe hierzu die vorhergehenden Ausführungen - sondern auch in horizontaler Richtung, d.h. es können auch Überwachungsdaten unterschiedlichster Bereiche einander zugeordnet werden.

In besonders vorteilhafter Weiterbildung des erfindungsgemäßen Verfahrens ist darin vorgesehen für das Schwingungsisolationssystem einen spezifischen Fingerabdruck zu bilden an Hand dessen beispielsweise eine umfassende Charakterisierung und/oder Bewertung des Isolationssystems vorgenommen werden kann. Die Terminologie des Fingerabdrucks bezeichnet insoweit insbesondere ein Identifizierungsmusters für ein Schwingungsisolationssystems auf der Basis einer vorgegebenen Regel- und/oder Steuerstruktur. Neben charakteristischen Datensätzen, beinhaltet der Fingerabdruck auch Informationen über schwingungsisolationsspezifische funktionale Abhängigkeiten mit deren Hilfe ein Isolationssystem beschrieben werden kann.

Hierbei werden beispielsweise Leistungsspektren von Schwingungen aufgenommen und/oder bestimmt. Dabei handelt es sich zum einen um insbesondere das Schwingungsisolationssystem anregende Schwingungen und zum anderen insbesondere um Schwingungen die vom Isolationskörper ausgehen und die Reaktion des Isolationkörpers auf die Anregung darstellen. Ferner beinhaltet der Fingerabdruck mit Vorteil insbesondere Informationen zu Übertragungsfunktionen, aus der sich insbesondere das Resonanzverhalten des Isolationskörpers mit Bezug auf die anregende Schwingung ablesen lässt. Entsprechende Hinweise lassen sich beispielsweise auch aus der Schwingungs-Phasen-Funktion, d.h. dem Phasenverlauf bezüglich anregender und resultierender Schwingung feststellen. Daher kann und werden dem Fingerabdruck ebenfalls entsprechende Daten zugeordnet. Wichtige Aufschlüsse zum Schwingungsverhalten und/oder dem Änderungsverhalten des Schwingungsislationssystems oder der Schwingungsisolationseinrichtung oder dem Isolationskörper können, neben den bereits genannten funktionalen Abhängigkeiten, insbesondere auch aus der Kohärenz der Schwingungen gewonnen werden, so dass nach der Erfindungen der charakteristische Fingerabdruck auch solche Informationen bzw. Datensätze umfasst.

Es sei darauf hingewiesen, dass die oben benannten Größen, die nach der Erfindung aufgenommen und/oder bestimmt werden, im Rahmen der Erfindung natürlich nicht nur wesentliche Daten für den zu bildenden Fingerabdruck sind, sondern es sich insoweit auch um wesentliche Daten handelt, als dass auf ihrer Grundlage im erfindungsgemäßen Verfahren unter anderem Regelabweichungen bestimmbar sind, mit deren Hilfe Stellsignale bzw. Stellgrößen berechnet werden, die auf die Stellglieder oder Aktoren zurückführbar sind. Ein Fingerabdruck im erfindungsgemäßen Sinne stellt somit insbesondere auch einen wesentlichen Teil der Regelungsstruktur dar, weil, wie oben geschildert, an ihm insbesondere das zeitliche Verhalten des Schwingungsisolationssystems und damit auch Änderungen unter definierten Bedingungen ablesbar und/oder festlegbar sind.

Eine weitere höchst vorteilhafte Weiterbildung des Verfahren besteht in der Möglichkeit den erfindungsgemäßen Fingerabdruck auch auf der Basis einer Simulation zu ermitteln. Es kann sich dabei um eine reine Simulation handeln, im Rahmen derer das Schwingungsisolationssystem vollständig computergestützt simuliert wird. Die Simulation kann aber auch darin bestehen, dass das Schwingungsisolationssystem modellhaft im Labormaßstab nachgebildet wird, um auf diese Weise einen Fingerabdruck vorab zu erhalten. Mischformen der Simulation sind natürlich auch denkbar und vorgesehen.

Mit Vorteil beinhaltet das Verfahren natürlich auch das Aufzeichnen oder Speichern und die Möglichkeit des Imund Exports entsprechend vorgehaltener oder aufgezeichneter Fingerabdrücke oder zumindest eines Teils davon. Wobei erfindungsgemäß nicht nur ein rein statisches Aufzeichnen vorgesehen ist, sondern gleichfalls ein dynamisches Aufzeichnen möglich ist. Unter dynamisch im erfindungsgemäßen Sinne ist insofern insbesondere ein kontinuierliches oder mehrfaches Aufzeichnen von Fingerabdrücken innerhalb bestimmter zeitlichen Grenzen und Intervallen zu verstehen.

Auf höchst vorteilhafte Weise können so im Rahmen der Erfindung über einen Vergleich von zumindest zweier Fingerabdrücke oder zumindest von Teilen derselben z.B. Schwingungstoleranzbänder definiert werden. Ferner kann auf diese Weise für das Schwingungsisolationssystem ein Fehlerregister oder eine Fehlerdatenbank aufgebaut werden. Wobei im Vorfeld durch einen Vergleich von Fingerabdrücken eine Zuordnung von Fehlern im Schwingungsisolationssystem, die sich durch eine oder mehrere spezifische Abweichung im Fingerabdruck gegenüber einem Soll-Fingerabdruck äußern, erfolgt. Mit dem erfindungsgemäßen Verfahren sind somit höchst vorteilhaft auch diagnostische Fähigkeiten verbunden. D.h. mit dem erfindungsgemäßen Fingerabdruck können Fehler oder Mängel nicht nur festgestellt und überprüft, sondern auch klassifiziert werden, um auf diese Weise Zustände des Schwingungisolationssystems einordnen zu können. Differenziert werden insoweit z.B. fehlerhafte Zustände oder Abweichungen vom Ursprungszustand des Schwingungsisolationssystems, die von der Schwingungsisolationseinrichtung herrühren und solche, die vom Isolationskörper ausgehen. Darüber hinaus können aber auch im einzelnen Änderungen am Isolationskörper oder in der Schwingungsisolationseinrichtung, die das Schwingungssystem beeinflussen, selbst aufgelöst und erkannt werden. Beispielhaft sei in diesem Zusammenhang das Lösen eines Schlauchs oder das einer Schraube am Isolationskörper erwähnt. In diesem Fall kann z.B. die Fingerabdruck-Diagnose dem Anwender mitteilen, welcher Schlauch sich gelöst hat und an welcher Stelle sich der Schlauch z.B. mit Bezug auf die Isolationseinrichtung befindet. Solche Informationen sind für den Anwender sehr nützlich, da sich so Reparaturzeiten und somit auch Produktionsleerlaufzeiten erheblich reduzieren lassen.

Im Zusammenhang mit der erfindungsgemäßen Angabe von Zustands-Fingerabdrücken wird nicht nur die Diagnosefähigkeit des Verfahrens begründet, sondern auch ein lernfähiges Verfahren oder System. Die Lernfähigkeit des Systems bezieht sich insbesondere auf die kontinuierliche Erweiterbarkeit der erfindungsgemäßen Fehlerdatenbank. Wobei die Erweiterung nach der Erfindung z.B. über Importschnittstellen oder Benutzerschnittstellen erfolgen kann. Ferner ist nach dem erfindungsgemäßen Verfahren aber auch ein Selbstlernen vorgesehen. Hierzu wird z.B. die Diagnosefunktion und/oder die Regelkreise der Erfindung vorzugsweise noch durch eine Fuzzylogik bzw. durch Fuzzyregeler ergänzt, auf deren Grundlage auch nur ein ungenau bekannter Zusammenhang zwischen Stör- und Regelgrößen und/oder auch der ungenaue Zusammenhang zwischen zwei Fingerabdrücken quantifizierbar und bestimmbar ist.

Eine weitere vorteilhafte Weiterbildung des Erfindungsgegenstands ist auch darin zu sehen, dass das Verfahren grundsätzlich das Visualisieren sämtlicher Größen und/oder Daten und/oder Abhängigkeiten beinhaltet. Dies bedeutet unter anderem, dass das Verhalten des Schwingungsisolationssystems oder des Isolationskörpers nach der Erfindung im Rahmen sämtlicher Tests, Simulationen und im aktiven Betrieb auf der Basis einer benutzerorientierten Schnittstelle insbesondere in dreidimensionaler Form dargestellt werden können.

Neben dem oben dargestellten erfindungsgemäßen Verfahrens bezieht sich die Erfindung auch auf ein Computerprogramm zur Durchführung des erfindungsgemäßen Verfahren, wenn das Programm auf einem Computer ausgeführt wird. Das erfindungsgemäße Computerprogramm zeichnet sich hierbei durch einzelne Programm-Module aus, die objekt-, funktions- und anwenderspezifisch Computerprogrammteile als Einheit zusammenfassen. Dabei sind Überschneidungen z.B. in bezug auf diagnostische und testspezische Programmteile möglich und vorgesehen. In einer ersten Spezifizierung können nach der Erfindung im wesentlichen zwei Programmteile unterschieden werden. Dies ist zum einen die controllerbezogene Software und die PC bzw. Host-System-bezogene Software.

Herzstück für die Schwingungsisolation ist hierbei die Controller-Software, die im wesentlichen für die Schwingungsisolation des Schwingungsisolationssystems verantwortlich ist. Von ihr werden auch die entsprechenden Schnittstellen zur Schwingungsisolationseinrichtung, d.h. zu der Einrichtung, die insbesondere den Isolationstisch, die Sensoren und Aktoren und mögliche weitere Stellglieder, insbesondere auch ein pneumatischen Schwingungssystem umfassen kann, und zum Host-System angesteuert.

Darüber hinaus weist das Controller-Modul aber auch diagnostische Fähigkeiten in bezug auf das Schwingungsisolationssystem auf, indem beispielsweise Überlastströme von Stellmotoren eigenständig überwacht und Systeminstabilitäten automatisch ausgeregelt werden können. Ferner besitzt die Controller-Software unter anderem die Fähigkeit diagnostische Tests des Schwingungsisolationssystems durchzuführen, wobei hierzu geeignete Schnittstellen bereitgestellt werden, die beispielsweise auch ein Test-Anregen des Isolationssystems von außen ermöglichen.

Für die Kommunikation mit dem Hostsystem stellt das Controller-Modul beispielsweise eine befehlsgetriebene sogenannte RCI(Remote Command Interface) Schnittstelle zur Verfügung über die unter anderem sämtliche vom Controller erfassten Parameter oder Größen in digitalisierter Form an das PC/Host-System übertragen werden können.

PC- bzw. Host-System-bezogene Programmteile des erfindungsgemäßen Computerprogramms umfassen im wesentlichen benutzerbezogene Funktionsmodule, insbesondere zur Kommunikation und/oder Steuerung des Controller-Moduls und/oder des Controllers. In ihrer Funktion als insbesondere Benutzerschnittstellen zum Schwingungsisolationssystem erweitern sie insbesondere die Diagnosefähigkeiten des Gesamtsystems aus Schwingungsisolationssystem und/oder aus Regel- und/oder Steuereinrichtung. Hierbei können Funktionsmodule oder Programmwerkzeuge zur Installation und/oder zur Visualisierung und/oder zur Diagnose und/oder zur Regelkreisabstimmung und/oder zur Contollerfunktionsüberwachung unterschieden werden. Wobei auch hier Überschneidungen in der Funktion vorgesehen und soweit zweckmäßig auch realisiert sind.

Ferner wird zur Durchführung des erfindungsgemäßen Verfahrens und zur Ausführung des erfindungsgemäßen Computerprogramms erfindungsgemäß auch eine Vorrichtung angegeben, welche ein oder mehrere zum schwingungsisolierenden Betrieb angeordnete Komponenten, insbesondere Sensoren und/oder Aktoren, umfasst, die mit einer Regel- und/oder Steuereinrichtung derart zusammenwirken, dass wenigstens ein für das Schwingungsisolationssystem charakterischer Datensatz bereitstellbar ist. Vorzugsweise entsprechend den Computerprogramm-Modulen ist die Regel- und/oder Steuereinrichtung ebenfalls modular aufgebaut.

Gleiches gilt auch für das nach der Erfindung beanspruchte System zur Erfassung eines Schwingungsisolationssystems
Die Erfindung wird nachfolgend anhand mehrerer Figuren im einzelnen beschrieben.

Es zeigen:
- Fig. 1: eine schematische Übersicht über das erfindungsgemäße System zum Erfassen eines Schwingungsisolationssystems
- Fig. 2: Zeigt den Hauptzugang zur Benutzerschnittstelle(UI, User Interface)
- Fig. 3: ein Fenster der Benutzerschnittstelle(SiDiMaT) in dem der zeitliche Verlauf eines Übertragungssignals dargestellt ist
- Fig. 4: ein Fenster der Benutzerschnittstelle SiDiMaT in dem frequenzabhängig das Leistungsspektrum eines Zeitsignals dargestellt ist.
- Fig. 5: ein Fenster der Benutzerschnittstelle SiDiMaT in dem eine Übertragungsfunktion(Kraft über Geschwindigkeit) dargestellt ist.
- Fig. 6: ein Fenster der Benutzerschnittstelle SiDiMaT in dem eine Phasenfunktion dargestellt ist.
- Fig. 7: ein Fenster der Benutzerschnittstelle SiDiMaT in dem die Coherenz zwischen anregendem und übertragenem Signal als Funktion dargestellt ist.

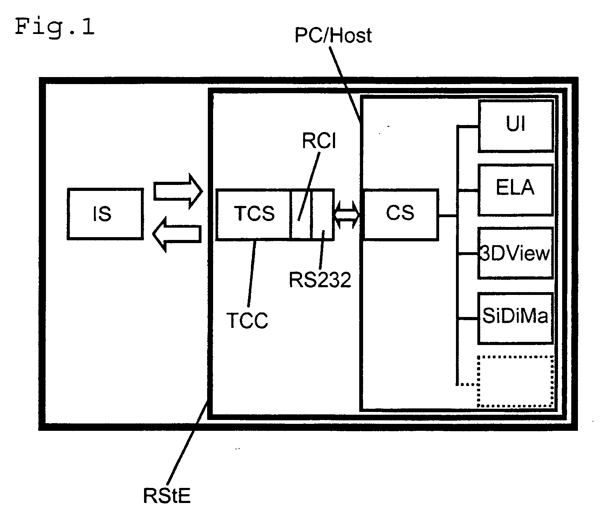

Aus Fig. 1 ist ein Diagramm zu entnehmen, welches im Zusammenhang, die einzelnen Komponenten des erfindungsgemäßen Übertragungs-, Steuer- und/oder Regelsystems darstellt. Nach dem vorliegenden Ausführungsbeispiel umfasst das Steuerund/oder Regelsystem sowohl Hard- als auch Software-Komponenten. Die hierbei unter anderem eingesetzbare Software bzw. Software-Module(TCS, CS, UI, UI, ELA, 3DView, SiDiMaT etc.), welche Teil der Regel- und Steuereinrichtung RStE sind, dienen im wesentlichen zur Schwingungsisolation von Schwingungsisolationssystemen mit aktiven Komponenten wie z.B. Ventilen und Motoren von Stellgliedern, die ihrerseits von Steuer- und/oder Regelsignalen eines sogenannten TC-Controllers(TCC) gespeist werden. Dabei bietet die erfindungsgemäße Software alle Funktionen die zur aktiven Schwingungsisolation notwendig sind und darüber hinaus benutzter definierbare diagnostische Fähigkeiten, die über MS-Windows basierende Benutzerschnittstellen vorgegeben werden können.

Die Software- oder Programmteile können in drei Gruppen eingeordnet werden. Dies ist zum einen die Controller spezifische Software(TCS) und zum anderen die PC/Host-Anwendungen, sowie geeignete "interface libraries", die unter anderem die parallele Anwendung mehrerer auch anderer Programme auf der Windows-Ebene erlauben(nicht in Fig. 1 gezeigt).

Die Controller-Software(TCS) läuft innerhalb des Controllers(TCC) auf einem DSP(Digital Signal Processor). Mit ihrer Hilfe werden, sämliche Sensorsignale vom Schwingungsisolationsystems(IS) erfasst und darauf aufbauend geeignete Aktorkräfte zur Schwingungsisolation berechnet. Hierzu stehen im Rahmen eines Ausführungsbeispiels vorzugsweise 16 Eingangs- und 20 Ausgangskanäle in bezug auf das Schwingungsisolationssystem zur Verfügung.

Darüber hinaus bietet sie die Möglichkeit eine pneumatische Isolationseinrichtung zu steuern und/oder zu regeln und gewährt Zugang zu sämtlichen verfügbaren Parametern oder Größen. Zur Schwingungsisolation stehen bei einer möglichen Ausführungsform beispielsweise ein geschwindingkeitsbestimmtes Regelkreis-Subsystem für alle sechs Freiheitsgrade(drei Translations- und drei Rotationsfreiheitsgrade), sechs Isolationsregelkreise für ein pneumatisches Isolationssubsystem und sechs voneinander unabhängige Regelkreise für ein lagebezogenes Isolationssubsystem zur Verfügung.

Darüber hinaus eröffnet die Controller-Software TCS eigendiagnostische Fähigkeiten, wobei durch sie beispielsweise eine Stellmotorenüberlast oder auch Instabilitäten des Isolationssystems verhindert werden können. Zur Stellmotorenüberwachung ermöglicht die Controller-Software die Online-Überwachung der Motorsignalspeisung und eine automatisierte Ausschaltfunktion für dieselbe. Die Eigenstabilisierung wird vorzugsweise durch ein automatisiertes Umschalten zwischen verschiedenen Regelsubsystemen, d.h. durch die Vorgabemöglichkeit unter anderem von Schwellwerten, erreicht. Die diagnostischen Fähigkeiten der Controller-Software TCS erstrecken sich aber auch auf die Möglichkeit Tests zur Prüfung des Schwingungsisolationssystems durchführen zu können. Hierzu beinhaltet der Controller TCC in Kombination mit der Controller-Software TCS die Fähigkeit Testanregungssignale zu erzeugen und/oder die Möglichkeit externe Anregungssignale einzuspeisen und zwar so, dass der oder die Anregungspunkte des Schwingungsisolationssystems in den Regelkreisen frei gewählt werden können.

Mit Bezug auf ein Überwachung des Schwingungsisolationssystems erlaubt der/die erfindungsgemäßen Controller TCC/ Controller-Software TCS auch hier das freie Abgreifen von zur Überwachung gewünschten Signale in den Regelkreisen. Jedoch können nicht nur vom Controller TCC gemessene Signale weitergegeben werden, sondern wichtige Größen zur Leistungsüberwachung, wie z.B. der Energieverbrauch des Isolationssystems etc., bestimmt und entsprechend bereitgestellt werden.

Die Signale, insbesondere die zur Diagnose dienenden Signale können nach der Erfindung entweder in analoger oder in digitaler Form vom Controller TCC abgegriffen werden.

Die digitale Weiterleitung von Signalen an das PC/Host-System erfolgt vorzugsweise über ein befehlsgetriebenes Software-Interface RCI, die sogenannte RCI-Schnittstelle (Remote-Command-Interface), an welche sich vorzugsweise wenigstens eine RS232-Schnittstellen anschließt, die die Hardware-Schnittstelle zum PC/Host-System darstellt. Selbstverständlich wird von der Erfindung jede Art von Schnittstelle unterstützt wie zum Beispiel USB, Parallel-Ports, Ethernet, CAN-Bus, etc.

Um einer Vielzahl von PC/Host-Anwendungen den Zugang zum Controller TCC, der über die serielle Schnittstelle mit dem PC/Host-System verbunden ist, zu ermöglichen, stellt die Erfindung den sogenannten Communication Server CS bereit. Nach einer möglichen Ausführungsform ist der Communication Server CS in der Lage mit 16 installierten seriellen Schnittstellen RS232 zu arbeiten. Ferner umfasst er auch diagnostische Fähigkeiten insbesondere zur Überwachung der Schnittstellen RS232.

Neben den diagnostischen Funktionen umfasst der erfindungsgemäße Communication Server CS, eine Anzeige zum Verbindungsstatus und Konfigurationselemente mit Bezug auf die Hardware-Einstellen, auf die der Communication Server CS zugreift.

Die Statusanzeige gibt dabei Informationen über den Typ der Verbindung, d.h. ob es sich um eine lokale oder um eine externe Verbindung mit einem Host-System handelt, über den Namen des Clients, der mit dem Communication Server CS verbunden ist und über die Anwendung d.h., ob zum Beispiel die Benutzerschnittstelle UI oder zum Beispiel Darstellungwerkzeug 3DView die Verbindung mit dem Controller TCC aufgenommen hat. Ferner wird das Datum und die Zeit der Verbindungsaufnahme und die verwendete Schnittstelle RS232 angezeigt. Hinsichtlich der Anschluss-Diagnose kann beispielsweise zwischen zwei Modi unterschieden werden. Dem Direkt-Modus und dem Terminal-Modus. Im Direkt-Modus können die Anwendungsprogramme mit dem Controller über die Schnittstelle RS232 kommunizieren. Im Terminal-Modus können beispielsweise Zeichen über eine Tastatur eingegeben und über die serielle Schnittstelle RS232 an den Controller TCC versandt werden. Entsprechend können auch Zeichen über die Schnittstelle RS232 empfangen werden.

Über eine spezielle Hardware-Konfigurations-Funktion können die bei einer Kommunikation mit dem Communication Server CS zu verwendenden Schnittstellen definiert werden. Für die Herstellung von Verbindungen mit insbesondere externen Hostsystemen verwendet der Communication Server CS die sogenannte DCOM(Distributed Component Object Model)-Funktionalität

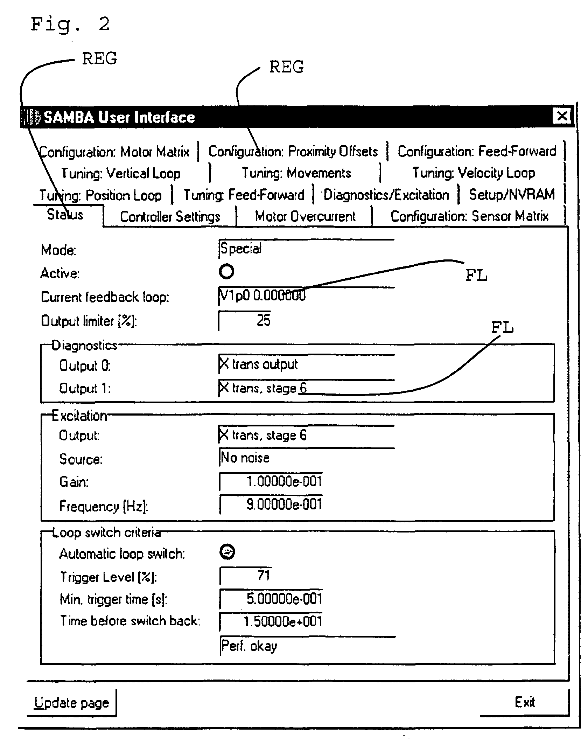

Insbesondere zur Installation der Regel- und Steuereinrichtung RStE umfasst dieselbe eine sogenannte Benutzerschnittstelle UI (User Interfache, Fig. 2). Mit der Benutzerschnittstelle UI ist es möglich im wesentlichen alle Größen des Controllers TCC abzufragen oder zu ändern. Aus Fig. 2 ist die Inhaltübersicht der Benutzerschnittstelle UI zu entnehmen. Die dort gezeigten Registerkarten REG umfassen Gruppen von Controllerdaten, die verschiedenen Feldern FL zugeordnet sind und die jeweils die aktuellsten Informationen beinhalten.

Bei der in Fig. 2 gezeigten Seite handelt es sich um die sogenannte Statusseite. Dies dient ausschließlich zur Information. D.h. keine Daten auf dieser Seite können verändert werden. Sie gibt im vorliegenden Fall den eingestellten Test-Mode "Special" an. In diesem Zusammenhang stehen auch die übrigen Informationen. Aus dem Feld FL zu "Current feedback loop" ist der Typ des Testregelkreises, nämlich "feedback", zu entnehmen. Aus den Feldern FL zu "Diagnostics" kann der zu diagnostizierende Freiheitsgrad im Testregelkreis entnommen werden. Hier der translatorische Freiheitsgrad in x-Richtung. Das Feld FL "Excitation" bezieht sich auf das Anregungssignal, nämlich einem Signal mit einer Amplitude von 1,0000*10⁻¹ und einer Frequenz von 9,0000*10⁻¹ Hz und darauf wo im Regelkreis und dort bei welcher Filterstufe die Anregung statt findet. Hier in Richtung des translatorische Freiheitsgrad in x-Richtung(xtrans, stage(Filterstufe) 6). Aus dem Feld FL "Loop switch criteria" nach Fig. 2 kann entnommen werden, ob zur Stabilisierung des Schwingungsisolationssystems ein automatischen Umschalten zwischen verschiedenen Regelkreisen vorgesehen ist ("Automatic loop switch" markiert oder nicht) und bei welchen Schwellwerten das Umschalten erfolgt "Trigger Level 71%", wie lange die minimum-Trigger-Zeit ist, hier 5,0000*10⁻¹s, und wie lange es dauert bis ein Umschalten auf den translatorischen x-Freiheitsgrad wieder erfolg, hier 1,5000*10⁺¹s. Ferner wird mit "Perf.okay" ein Hinweis darauf gegeben das die Performace d.h. die Funktion oder Leistung des Systems in Ordnung ist. Mit dem Button "Update page", welcher sich auf jeder der Registerkarten befindet, ist es möglich die angegebenen Werte stets zu aktualisieren.

Auf der Registerkarte RL "Controller Settings" kann der "Output limiter" eingestellt werden. Der "Output limiter" stellt eine Schwelle dar, die vom Ausgabesignal nicht überschritten werden kann. Es stellt damit eine Sicherheitsfunktion für angeschlossene Aktoren dar. Darüber hinaus lassen sich dort die Umschaltkriterien, d.h. zum Beispiel Schwellwerte, für die automatischen Regelkreisumschaltung ändern. Ferner können dort die Funktionsüberwachungseinstellungen geändert werden. Hier können alle sicherheitsrelevanten Funktionen des Controllers eingestellt werden. Das sind die in Echtzeit geprüften Teile des Controllers auch "Built-In-Test" genannt. Auf der Registerkarte "Motor Overcurrent" können Schwellwerte für Überströme mit Bezug auf die Stellmotoren eingegeben werden. Ferner werden dort die angelegten Motorleistungen und der aktuelle Zustand der Motoren angezeigt. Auf der Registerkarten "Configuration: Sensor Matrix" kann eingestellt werden, wie die Eingangssignale jede logische Achse bzw. jeden Freiheitsgrad, getrennt nach Geschwindigkeits- und Positionsregelkreis, beeinflussen werden. Auf der Registerkarte "Configuration: Motor Matix" kann angegeben werden wie die Ausgangssignale jede logische Achse bzw. jeden Freiheitsgrad, getrennt nach Geschwindigkeits- und Positionsregelkreis, miteinander verbunden werden. Die Karte "Configuration: Proximity Offsets" ermöglicht die Konfiguration von vertikalen und/oder horizontalen Abstands-Offsets, wie sie im Positionsregelkreis verwendet werden. Über die "Configuration: Feed-Forward" Karte kann bestimmt werden, in welcher Weise jede Achse des "Feed-Forward-Regelkreis" durch Störungen, wie z.B. die Bewegung des Lagerungstisches des Isolationskörpers, beeinflusst wird. Über die einzelnen "Tuning-Karten" können die einzelnen Regelkreise abgestimmt werden. Dabei kann insbesondere eine Höhenabstimmung des Isolationskröpers über die "Tuning: Vertical Loop Karte", ein Abstimmen der Drucksetzpunkte für unterschiedlich schwere Isolationskörper über die "Tuning: Movements", ein Abstimmen des geschwindigkeitsbestimmten Regelkreises über die "Tuning: Velocity Loop Kart", ein Abstimmen des Positions Regelkreises in Verbindung mit der Abstimmung des Abstands-Offsets und die Abstimmung der Feed-Forward-Regelkreise über die entsprechende Registerkarte erzielt werden. Wobei die Abstimmung der Feed-Forward-Regelkreise das vorgeben von Amplituden beinhaltet. Ferner ist es über die Benutzerschnittstelle möglich den Punkt bzw. die Filterstufe innerhalb der Regelkreise festzulegen, wo z.B. eine Testanregung erfolgen soll. Hierfür dient die Registerkarte "Diagnostic/Excitation", auf der auch die Verstärkungsfaktoren und die Frequenz der Anregung konfiguriert werden können. Über die Registerkarte "Setup/NVRAM" werden insbesondere die Einstellungsdaten eines Controllers gespeichert, geladen oder gelöscht. Darüber hinaus kann über das "User Interface" UI die interne Konfiguration der Digital-Analog- und der Analog-Digital-Kanal-Permutations-Tabellen festzulegen.

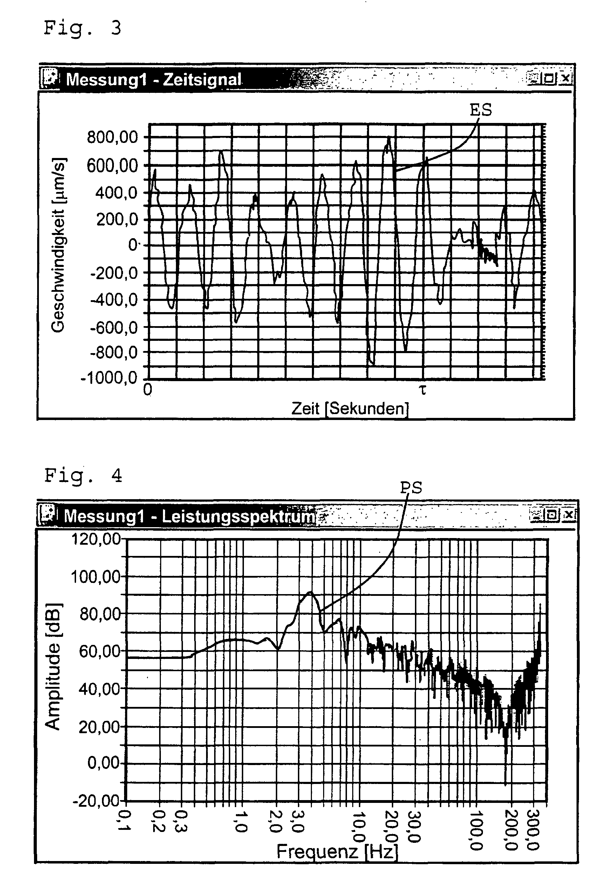

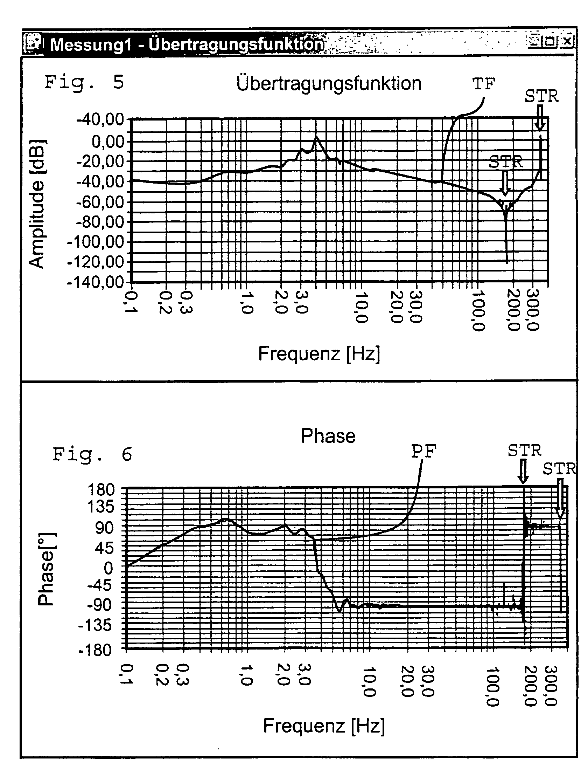

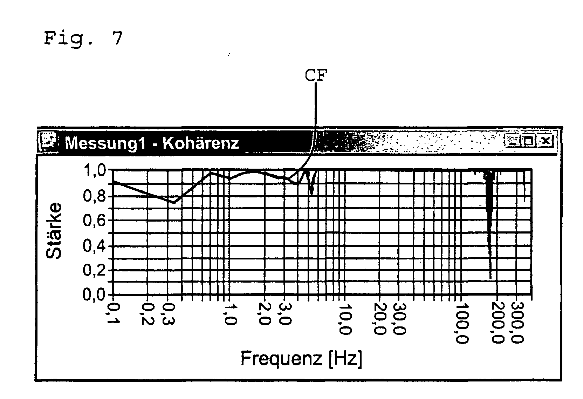

Eine weitere wichtige hostseitige Anwendung besteht in der Signal Anzeige- und Manipulationswerkzeug SiDiMaT(Signal Display and Manipulation Tool), welches sich insbesondere auch durch ein sogenanntes "MDI" bzw. "multiple document interface" auszeichnet. Diese Anwendung dient als ein hoch entwickeltes Werkzeug zur automatisierten Klassifikation eines Schwingungsisolationssystems IS. Es ist zum Beispiel in der Lage für eine Schwingungsisolationssystem automatisiert eine Übertragungsfunktion TF(Fig. 5) mit Bezug auf alle sechs Freiheitsgrade zu bestimmen, wobei eine Übertragungsfunktion TF zunächst bei nur passiver Dämpfung des Isolationskörpers gebildet werden kann und in einem zweiten Schritt bei aktiver Schwingungsisolation. Es besteht die Möglichkeit die Übertragungsfunktion beispielsweise zunächst nur für einen Freiheitsgrad zu bilden, so z.B. für die des x-translatorischen Freiheitsgrads. Eine solche Übertragungsfunktion ist exemplarisch aus Figur 5 zu entnehmen. Hierbei handelt es sich um eine Aufnahme im nicht aktiv gedämpften Zustand des Schwingungsisolationssystems IS. Dies ist insbesondere an der ausgeprägten Resonanzspitze RS bei ca. 4,0Hz zu erkennen. Zum Errechnen der Übertragungsfunktion TF wird vom SiDiMaT sowohl der zeitliche Verlauf der Anregenden Schwingung ES(Fig.3) als auch die vom Schwingungssystem übertragenen Schwingung ES aufgezeichnet. Zur Veranschaulichung ist hierzu in Figur 3 der Graph des zeitlichen Verlaufs der übertragenen Schwingung dargestellt(Geschwindigkeit in µm/s über Zeit in Sekunden). Ferner wird zu beiden Signalen durch Fouriertransformation das Leistungsspektrum PS(Figur 4) bestimmt, woraus in geeigneter Weise die Übertragungs- bzw. Transferfunktion TF gebildet wird. Darüber hinaus wird standardmäßig durch das SiDiMaT auch die Phasenbeziehung PF zwischen anregender und übertragener Schwingung bestimmt und dargestellt und zur Kontrolle der Messergebnisse die Kohärenzfunktion CF(Figur 7) zwischen dem anregenden und übertragenen Signal ES gebildet. Im vorliegenden Fall liegt die Kohärenz der Signal bis zur Resonanz im Bereich von 1 bis 0,75.

Auf Grundlage der vorgestellten funktionalen Abhängigkeiten können weitreichende Aussagen insbesondere über die notwendige Abstimmung von "Feedback-Regelkreisen" als auch über Veränderungen jeder Art des Schwingungsisolationssystems IS gewonnen werden. So kann zum Beispiel mit dem SiDiMaT durch die Vorgabe bestimmter Abstimmungsregeln eine manuelle oder automatisierte Abstimmung der "Feedback-Regelkreise" erfolgen. So ist es nach der Erfindung erstmals möglich bereits auf der Grundlage der üblichen Theorie zur Parametrisierung von Feedbackreglern, anhand der Phasen- und Amplitudenverläufe eine gezielte stabile Parametrisierung der Rückkopplung vorzunehmen.

Ferner können vermittels der oben genannten funktionalen Abhängigkeiten Änderungen am Schwingungsisolationssystem IS festgestellt werden. Beispielsweise können auf der Übertragungsfunktionskurve TF weitere Resonanzen bzw. Resonanzspitzen, sogenannte Strukturresonanzen STR, auftauchen, die ihre Ursache aus konstanten Störungen des Schwingungsisolationssystems IS haben. Dabei kann es sich beispielsweise um einen auf dem Isolationskörper versehentlich abgelegten Gegenstand handeln. Daneben kann es z.B. auch zu Kopplungen der Schwingungsachsen kommen, so dass anstelle einer Resonanzspitze RS nunmehr ein Doppel oder Mehrfachresonanz entsteht und an der Übertragungsfunktion TF als Doppelspitze sichtbar wird.

All diese Veränderungen der Übertragungsfunktion TF können in der Regel spezifischen Änderungen des Schwingungsisolationssystems IS zugewiesen werden. Insbesondere zur Nutzbarmachung dieser Erkenntnis bietet das SiDiMaT die Möglichkeit die Informationen und Daten zu den verschiedenen funktionalen Abhängigkeiten abzuspeichern und/oder zu exportieren, um sie so einer weiteren Verarbeitung zugänglich zu machen.

Die Erfindung beinhaltet insoweit auch die Fähigkeit, die spezifischen Veränderungen der funktionalen Abhängigkeiten bei sich ändernden Zuständen des Schwingungsisolationssystems IS aufzuzeichnen und den entsprechenden Zuständen zuzuordnen. Dies kann zum einen durch manuelle Eingaben über geeignete Benutzerschnittstellen gemacht werden oder in automatisierter Form über Fuzzyregelkreise. Auf diese Weise werden Vergleichsdaten zur Verfügung gestellt, die eine einfache Fehler oder Zustandserkennung ermöglichen. In einer vereinfachten Ausführungsform kann so z.B. eine Bezugsmessung definiert werden, möglicherweise gemeinsam mit Toleranzbereichen der Schwingung, welche als Referenzmessung dienen kann, wobei die aktuelle Messung im selben Diagramm über die Referenzmessung gelegt werden kann, z.B. eine weitere Übertragungsfunktion in Figur 5. Dies erlaubt auf einfache Weise den direkten Vergleich inwieweit das bestehende System mit dem Referenzsystem übereinstimmt. Erfindungsgemäß können auf diese Weise nicht nur wie oben beschrieben einzelne funktionale Abhängigkeiten für z.B. bestimmte Freiheitsgrade gebildet werden, sondern ganze sogenannte Fingerabdrücke des Schwingungsisolationssystems IS, die eine schingungsisolationstechnische Gesamtbeschreibung des Isolationssystems ermöglichen. Als Fingerabdruck kann insoweit z.B. die Messung sämtlicher oben aufgeführter funktionaler Abhängigkeiten für alle sechs Freiheitsgrade in den "Feedback-Regelkreisen" bezeichnet werden. Diese Fingerabdrücke können wiederum entsprechend des obigen Einzelmessungsvergleichs bei unterschiedlichen Zuständen des Schwingungsisolationssystems nach der Erfindung bestimmt und miteinander verglichen werden. Dies schließt natürlich einen Vergleich von Einzelmessungen mit Teilen eines Fingerabdrucks nicht aus, soweit dies z.B. zur Fehlererkennung sinnvoll ist. Mit der Bildung und dem Vergleich von Fingerabdrücken auf der Basis von Fehlerdatenbanken wird erstmals eine Expertensystem zur Fehlererkennung am Schwingungsisolationssystem IS geschaffen, mit dem es z.B. möglich ist Fehler zu unterscheiden die zum einen vom Isolationskörper oder zum anderen von der Schwingungsisolationseinrichtung bzw. den Sensoren oder Aktoren etc. herrühren. Ferner können insbesondere auf einfach Art und Weise typische Fehler am Isolationskörper erkannt, lokalisiert und behoben werden. Solche Fehler können z.B. sein: Am Isolationskörper hat sich eine Schraube oder ein Schlauch etc. gelöst. Eine solche Zustandsänderung kann sich z.B. in einer bestimmten Strukturresonanz STR oder in einer Änderung der Strukturresonanz STR äußern.

Als weitere hostseitige Anwendung im Rahmen der Erfindung ist unter anderem das Visualisierungswerkzeug(3DView) zu nennen. Diese Anwendung ist in der Lage die Bewegung des Isolationskörpers im Rahmen einer 3D-Darstellung in Mikrometergnauigkeit zu zeigen. Dabei kann ein simulierbarer Isolationskörper in bezug auf Größe und Gestalt an individuelle Bedürfnisse angepasst werden. Ferner können die verschiedensten Schwingungsisolationssysteme simuliert werden. Die Amplitude der Isolationskörperbewegung kann dabei verschieden skaliert werden. Ferner können Rahmen Toleranzbereiche der Schwingung, sowohl in horizontaler als auch in vertikaler Richtung des Isolationskörpers definiert werden. Darüber hinaus ist es möglich die Bewegung des Isolationskörper von verschiedenen Standpunkten aus zu betrachten.

Aufgrund der offenen Bauweise des erfindungsgemäßen Erfassungssystems ist es grundsätzlich möglich das erfindungsgemäße Computerprogramm bzw. die erfindungsgemäße Vorrichtung mit beliebig vielen weiteren Modulen zu erweitern. Erwähnt sei in diesem Zusammenhang noch die sogenannte "Event-Logging-Anwendung" ELA. Mit dieser Anwendung ist es möglich eine Reihe von Steuerfunktionen mit einem Modul zu überwachen. Hierbei handelt es sich beispielsweise um die zyklische Überwachung von Motorzuständen und Temperaturen der Stellmotoren, um die der Ausregelung eines pneumatischen Isolationssystems, um die der Funktionsüberwachung oder Leistungsüberwachung des Schwingungsisolationseinrichtung IS und um die Überwachung der Regelkreisumschaltung zur Stabilisierung des Isolationssystems. Die einzelnen Überwachungsfunktionen können hierbei individuell eingestellt werden. Über automatisch schaltbare Informationsfenster, können die Benutzer, auch über Email, über mögliche Schwellwertüberschreitungen oder Umschaltereignisse bekanntgemacht werden.

## Patentansprüche

1. Verfahren zum Erfassen eines Schwingungsisolationssystems mit wenigstens einer einem Isoloationskörper zuordenbaren Schwingungsisolationseinrichtung, wobei dem Schwingungsisolationssystems eine Regel- und/oder Steuereinrichtung zugeordnet ist, folgende Schritte beinhaltend:
a) Bereitstellen einer Regel- und/oder Steuerstruktur
b) Aufnehmen und Verarbeiten von mit dem Isolationssystem in Beziehung stehender Signale und/oder Größen
c) Bilden von wenigstens einem isolationssystemcharakteristischen Datensatzes zur Bewertung des Schwingungsisolationssystems

2. Verfahren nach Anspruch 1, **dadurch gekennzeichnet, dass** das Verfahren das Konfigurieren der Regel- und Steuerstruktur umfasst.

3. Verfahren nach Anspruch 1 oder 2, **dadurch gekennzeichnet, dass** das Verfahren das Bereitstellen von Regelkreisen und Regelungsarten in der Regel- und/oder Steuerstruktur umfasst

4. Verfahren nach einem der vorhergehenden Ansprüche, **dadurch gekennzeichnet, dass** das Verfahren die Auswahl zwischen Rückkopplungs- und/oder Forwärtskopplungsreglung und/oder adaptives Regeln in der Regel- und/oder Steuerstruktur beinhaltet

5. Verfahren nach einem der vorhergehenden Ansprüche, **dadurch gekennzeichnet, dass** das Verfahren das Festlegen von beschleunigungsbestimmten und/oder geschwindigkeitsbestimmten und/oder positionsbestimmten Regelkreisen in der Regel- und/oder Steuerstruktur umfasst.

6. Verfahren nach einem der vorhergehenden Ansprüche, **dadurch gekennzeichnet, dass** das Verfahren das Konfigurieren der Regel- und Steuerstruktur Bereitstellen von Regel- und Steuergrößen in der Regelund/oder Steuerstruktur umfasst.

7. Verfahren nach einem der vorhergehenden Ansprüche, **dadurch gekennzeichnet, dass** das Verfahren das Festlegen von aktor- und sensor-spezifischen Größen in der Regelund/oder Steuerstruktur umfasst.

8. Verfahren nach einem der vorhergehenden Ansprüche, **dadurch gekennzeichnet, dass** das Verfahren das Abstimmen der Regelkreise umfasst.

9. Verfahren nach einem der vorhergehenden Ansprüche, **dadurch gekennzeichnet, dass** Verfahren den Schritt des Regelns und/oder Steuerns des Schwingungsisolationssystems, insbesondere mit Hilfe der Größen und/oder Signale und/oder des isolationssystem-charakteristische Datensatzes umfasst.

10. Verfahren nach einem der vorhergehenden Ansprüche, **dadurch gekennzeichnet, dass** das Verfahren das Bereitstellen und Anpassen von Schnittstellen zwischen dem Schwingungsisolationssytem und der Regel und/oder Steuereinrichtung und zu externen Einrichtungen umfasst.

11. Verfahren nach einem der vorhergehenden Ansprüchen, **dadurch gekennzeichnet, dass** das Verfahren das Bereitstellen von Schnittstellen zum Zuführen und/oder Abgreifen von ex- oder internen Signalen beinhaltet.

12. Verfahren nach einem der vorhergehenden Ansprüchen, **dadurch gekennzeichnet, dass** Verfahren das das Überwachen und Steuern der Schnittstellen beinhaltet.

13. Verfahren nach einem der vorhergehenden Ansprüche, **dadurch gekennzeichnet, dass** das Verfahren das Aufzeichnen von Datensätzen umfasst.

14. Verfahren nach einem der vorhergehenden Ansprüche, **dadurch gekennzeichnet, dass** das Verfahren das Testen der Regel- und/oder Steuerstruktur beinhaltet.

15. Verfahren nach einem der vorhergehenden Ansprüche, **dadurch gekennzeichnet, dass** das Verfahren das Bereitstellen von ex- und/oder internen Anregungssignalen umfasst.

16. Verfahren nach einem der vorhergehenden Ansprüche, **dadurch gekennzeichnet, dass** das Verfahren das Konfigurieren der Anregungssignalbereitstellung umfasst.

17. Verfahren nach einem der vorhergehenden Ansprüche, **dadurch gekennzeichnet, dass** Verfahren Überwachen der Verfahrenschritte umfasst.

18. Verfahren nach einem der vorhergehenden Ansprüche, **dadurch gekennzeichnet, dass** das Verfahren das Erzeugen eines isolationsspezifischen Fingerabdrucks beinhaltet.

19. Verfahren nach einem der vorhergehenden Ansprüche, **dadurch gekennzeichnet, dass** das Verfahren das Aufnehmen und/oder Bestimmen von Daten mit Bezug auf schwingungsisolationsspezifischer funktionaler Abhängigkeiten beinhaltet.

20. Verfahren nach einem der vorhergehenden Ansprüche, **dadurch gekennzeichnet, dass** das Verfahren das Aufnehmen und/oder Bestimmen von einem Leistungsspektrum zuordenbaren Daten umfasst.

21. Verfahren nach einem der vorhergehenden Ansprüche, **dadurch gekennzeichnet, dass** Verfahren das Aufnehmen und/oder Bestimmen von einer Übertragungsfunktion zuordenbaren Daten umfasst.

22. Verfahren nach einem der vorhergehenden Ansprüche, **dadurch gekennzeichnet, dass** das Verfahren das Aufnehmen und/oder Bestimmen von einer Schwingungs-Kohärenz-Funktion zuordenbaren Daten umfasst.

23. Verfahren nach einem der vorhergehenden Ansprüche, **dadurch gekennzeichnet, dass** das Verfahren das Aufnehmen und/oder Bestimmen von einer Schwingungs-Phasen-Funktion zuordenbaren Daten umfasst.

24. Verfahren nach einem der vorhergehenden Ansprüche, **dadurch gekennzeichnet, dass** das Verfahren die Aufnahme und/oder Bestimmen der Daten für alle vorgesehenen Schwingsfreiheitsgrade umfasst.

25. Verfahren nach einem der vorhergehenden Ansprüche, **dadurch gekennzeichnet, dass** das Verfahren das Erzeugen von Schingungstoleranzbänder umfasst.

26. Verfahren nach einem der vorhergehenden Ansprüche, **dadurch gekennzeichnet, dass** das Verfahren das Vergleichen von aufgezeichneten und aktuellen Datensätzen oder Fingerabdrücken beinhaltet.

27. Verfahren nach einem der vorhergehenden Ansprüche, **dadurch gekennzeichnet, dass** das Verfahren das dynamische Aufzeichnen von Fingerabdruck-Datensätzen umfasst.

28. Verfahren nach einem der vorhergehenden Ansprüche, **dadurch gekennzeichnet, dass** das Verfahren das Simulieren des Schwingungsisolationssystem umfasst.

29. Verfahren nach einem der vorhergehenden Ansprüche, **dadurch gekennzeichnet, dass** das Simulieren ein Schwingungsanregen der des Schwingungsisolationssystems umfasst.

30. Verfahren nach einem der vorhergehenden Ansprüche, **dadurch gekennzeichnet, dass** das Verfahren das Zuordnen von Fingerabdrücken oder Datensätzen zu Fehlermeldungen umfasst.

31. Verfahren nach einem der vorhergehenden Ansprüche, **dadurch gekennzeichnet, dass** das Verfahren das Diagnostizieren des Schwingungsisolationssystems beinhaltet.

32. Verfahren nach einem der vorhergehenden Ansprüche, **dadurch gekennzeichnet, dass** das Verfahren ein Vergleichen von Datensätzen und/oder Fingerabdrücken beinhaltet.

33. Verfahren nach einem der vorhergehenden Ansprüche, **dadurch gekennzeichnet, dass** das Verfahren das Visualisieren der Größen und/oder der Daten und/oder der Abhängigkeiten beinhaltet

34. Computerprogramm mit Programmcode-Mitteln, zur Durchführung eines Verfahren nach einem der Anspruch 1 bis 33, wenn das Programm auf einem Computer ausgeführt wird.

35. Computerprogramm nach Anspruch 34, **dadurch gekennzeichnet, dass** das Computerprogramm mehrere Programm-Module umfasst.

36. Computerprogramm nach Anspruch 34 oder 35, **dadurch gekennzeichnet, dass** das Computerprogramm ein Controller spezifisches Programm-Modul zur Regelung und/oder Steuerung des Schwingungsisolationssystem umfasst.

37. Computerprogramm nach einem der Ansprüche 34 bis 36, **dadurch gekennzeichnet, dass** das Controller-Modul diagnostische Fähigkeiten in bezug auf das Schwingungsisolationssystem beinhaltet.

38. Computerprogramm nach einem der Ansprüche 34 bis 37, **dadurch gekennzeichnet, dass** das Controller-Modul zur Erzeugung und Einspeisung von Anregungssignalen im Controller ausgelegt ist.

39. Computerprogramm nach einem der Ansprüche 34 bis 38, **dadurch gekennzeichnet, dass** das Controller-Modul eine Befehls getriebene Schnittstelle umfasst.

40. Computerprogramm nach einem der Ansprüche 34 bis 39, **dadurch gekennzeichnet, dass** das Computerprogramm benutzerbezogene Funktionsmodule, insbesondere zur Kommunikation und/oder Steuerung des Controller-Moduls und/oder des Controllers umfasst.

41. Computerprogramm nach einem der Ansprüche 34 bis 40, **dadurch gekennzeichnet, dass** die Funktionsmodule Programmwerkzeuge zur Installation und/oder zur und/oder Visualisierung und/oder Diagnose und/oder zur Regelkreisabstimmung und/oder zur Controllerfunktionsüberwachung beinhalten.

42. Vorrichtung, insbesondere zur Durchführung eines Verfahrens nach den Ansprüchen 1 bis 33 und insbesondere zur Ausführung eines Computerprogramms nach den Ansprüchen 34 bis 41, umfassend:
- eine Schwingungsisolationseinrichtung, auf der ein Isolationskörper angeordnet werden kann, welche
- ein oder mehrere zum schwingungsisolierenden Betrieb angeordnete Komponenten, insbesondere Sensoren und/oder Aktoren, umfasst, die
mit einer Regel- und/oder Steuereinrichtung derart zusammenwirken, dass wenigstens ein für das Schwingungsisolationssystem charakterischer Datensatz bereitstellbar ist.

43. Vorrichtung nach Anspruch 42, **dadurch gekennzeichnet, dass** die Regel- und/oder Steuereinrichtung modular aufgebaut ist.

44. Vorrichtung nach Anspruch 42 oder 43, **dadurch gekennzeichnet, dass** die Regel- und/oder Steuereinrichtung eine Controller-Einheit und/oder benutzerorientierte Funktionseinheiten umfasst.

45. Vorrichtung nach Anspruch 42 bis 44, **dadurch gekennzeichnet, dass** die Funktionseinheiten Einheiten zur Installation und/oder zur und/oder Visualisierung und/oder Diagnose und/oder zur Regelkreisabstimmung und/oder zur Contollerfunktionsüberwachung beinhalten.

46. System zur Erfassung eines Schwingungsisolationssystems **gekennzeichnet durch** eine Verfahren und/oder eine Vorrichtung und/oder ein Computerprogramm nach einem der vorhergehenden Ansprüchen.

## Geänderte Patentansprüche

### Geänderte Patentansprüche gemäss Regel 86(2) EPÜ.

**1.** Verfahren zum Erfassen eines
Schwingungsisolationssystems mit wenigstens einer einem Isoloationskörper zuordenbaren Schwingungsisolationseinrichtung, wobei dem Schwingungsisolationssystems eine Regel- und/oder Steuereinrichtung zugeordnet ist, folgende Schritte beinhaltend:
a) Bereitstellen einer Regel- und/oder Steuerstruktur
b) Aufnehmen und Verarbeiten von mit dem Isolationssystem in Beziehung stehender Signale und/oder Größen **durch ein Anregen des Schwingungsisolationssystems zu Schwingungen,**
c) Bilden von wenigstens einem isolationssystemcharakteristischen **Soll-Fingerabdruck-**Datensatzes **auf der Basis der Steuerstruktur und der aufgenommenen Größen** zur Bewertung des Schwingungsisolationssystems,
d) **Aufnehmen und Bilden eines Ist-Fingerabdruck-Datensatzes,**
e) **Vergleichen zumindest eines Teils des Soll- mit zumindest einem Teil des Ist-Fingerabdrucks,**
f) **Bewerten des Zustandes des Schwingungsisolationssystems auf der Basis spezifischer Abweichungen zwischen dem Soll- und dem Ist-Fingerabdruck.**

**2.** Verfahren nach Anspruch 1, **dadurch gekennzeichnet, dass** das Verfahren das Konfigurieren der Regel- und Steuerstruktur umfasst.

**3.** Verfahren nach Anspruch 1 oder 2, **dadurch gekennzeichnet, dass** das Verfahren das Bereitstellen von Regelkreisen und Regelungsarten in der Regel- und/oder Steuerstruktur umfasst

**4.** Verfahren nach einem der vorhergehenden Ansprüche, **dadurch gekennzeichnet, dass** das Verfahren die Auswahl zwischen Rückkopplungs- und/oder Forwärtskopplungsreglung und/oder adaptives Regeln in der Regel- und/oder Steuerstruktur beinhaltet

**5.** Verfahren nach einem der vorhergehenden Ansprüche, **dadurch gekennzeichnet, dass** das Verfahren das Festlegen von beschleunigungsbestimmten und/oder geschwindigkeitsbestimmten und/oder positionsbestimmten Regelkreisen in der Regel- und/oder Steuerstruktur umfasst.

**6.** Verfahren nach einem der vorhergehenden Ansprüche, **dadurch gekennzeichnet, dass** das Verfahren das Konfigurieren der Regel- und Steuerstruktur Bereitstellen von Regel- und Steuergrößen in der Regelund/oder Steuerstruktur umfasst.

**7.** Verfahren nach einem der vorhergehenden Ansprüche, **dadurch gekennzeichnet, dass** das Verfahren das Festlegen von aktor- und sensor-spezifischen Größen in der Regelund/oder Steuerstruktur umfasst.

**8.** Verfahren nach einem der vorhergehenden Ansprüche, **dadurch gekennzeichnet, dass** das Verfahren das Abstimmen der Regelkreise umfasst.

**9.** Verfahren nach einem der vorhergehenden Ansprüche, **dadurch gekennzeichnet, dass** Verfahren den Schritt des Regelns und/oder Steuerns des Schwingungsisolationssystems, insbesondere mit Hilfe der Größen und/oder Signale und/oder des isolationssystem-charakteristische Datensatzes umfasst.

**10.** Verfahren nach einem der vorhergehenden Ansprüche, **dadurch gekennzeichnet, dass** das Verfahren das Bereitstellen und Anpassen von Schnittstellen zwischen dem Schwingungsisolationssytem und der Regel und/oder Steuereinrichtung und zu externen Einrichtungen umfasst.

**11.** Verfahren nach einem der vorhergehenden Ansprüchen, **dadurch gekennzeichnet, dass** das Verfahren das Bereitstellen von Schnittstellen zum Zuführen und/oder Abgreifen von ex- oder internen Signalen beinhaltet.

**12.** Verfahren nach einem der vorhergehenden Ansprüchen, **dadurch gekennzeichnet, dass** Verfahren das das Überwachen und Steuern der Schnittstellen beinhaltet.

**13.** Verfahren nach einem der vorhergehenden Ansprüche, **dadurch gekennzeichnet, dass** das Verfahren das Aufzeichnen von Datensätzen umfasst.

**14.** Verfahren nach einem der vorhergehenden Ansprüche, **dadurch gekennzeichnet, dass** das Verfahren das Testen der Regel- und/oder Steuerstruktur beinhaltet.

**15.** Verfahren nach einem der vorhergehenden Ansprüche, **dadurch gekennzeichnet, dass** das Verfahren das Bereitstellen von ex- und/oder internen Anregungssignalen umfasst.

**16.** Verfahren nach einem der vorhergehenden Ansprüche, **dadurch gekennzeichnet, dass** das Verfahren das Konfigurieren der Anregungssignalbereitstellung umfasst.

**17.** Verfahren nach einem der vorhergehenden Ansprüche, **dadurch gekennzeichnet, dass** das Verfahren das Überwachen der Verfahrenschritte umfasst.

**18.** Verfahren nach einem der vorhergehenden Ansprüche, **dadurch gekennzeichnet, dass** das Verfahren das Aufnehmen und/oder Bestimmen von Daten mit Bezug auf schwingungsisolationsspezifischer funktionaler Abhängigkeiten beinhaltet.

**19.** Verfahren nach einem der vorhergehenden Ansprüche, **dadurch gekennzeichnet, dass** das Verfahren das Aufnehmen und/oder Bestimmen von einem Leistungsspektrum zuordenbaren Daten umfasst.

**20.** Verfahren nach einem der vorhergehenden Ansprüche, **dadurch gekennzeichnet, dass** das Verfahren das Aufnehmen und/oder Bestimmen von einer Übertragungsfunktion zuordenbaren Daten umfasst.

**21.** Verfahren nach einem der vorhergehenden Ansprüche, **dadurch gekennzeichnet, dass** das Verfahren das Aufnehmen und/oder Bestimmen von einer Schwingungs-Kohärenz-Funktion zuordenbaren Daten umfasst.

**22.** Verfahren nach einem der vorhergehenden Ansprüche, **dadurch gekennzeichnet, dass** das Verfahren das Aufnehmen und/oder Bestimmen von einer Schwingungs-Phasen-Funktion zuordenbaren Daten umfasst.

**23.** Verfahren nach einem der vorhergehenden Ansprüche, **dadurch gekennzeichnet, dass** das Verfahren die Aufnahme und/oder Bestimmen der Daten für alle vorgesehenen Schwingsfreiheitsgrade umfasst.

**24.** Verfahren nach einem der vorhergehenden Ansprüche, **dadurch gekennzeichnet, dass** das Verfahren das Erzeugen von Schingungstoleranzbänder umfasst.

**25.** Verfahren nach einem der vorhergehenden Ansprüche, **dadurch gekennzeichnet, dass** das Verfahren das Vergleichen von aufgezeichneten und aktuellen Datensätzen oder Fingerabdrücken beinhaltet.

**26.** Verfahren nach einem der vorhergehenden Ansprüche, **dadurch gekennzeichnet, dass** das Verfahren das dynamische Aufzeichnen von Fingerabdruck-Datensätzen umfasst.

**27.** Verfahren nach einem der vorhergehenden Ansprüche, **dadurch gekennzeichnet, dass** das Verfahren das Simulieren des Schwingungsisolationssystem umfasst.

**28.** Verfahren nach einem der vorhergehenden Ansprüche, **dadurch gekennzeichnet, dass** das Simulieren ein Schwingungsanregen der des Schwingungsisolationssystems umfasst.

**29.** Verfahren nach einem der vorhergehenden Ansprüche, **dadurch gekennzeichnet, dass** das Verfahren das Zuordnen von Fingerabdrücken oder Datensätzen zu Fehlermeldungen umfasst.

**30.** Verfahren nach einem der vorhergehenden Ansprüche, **dadurch gekennzeichnet, dass** das Verfahren das Diagnostizieren des Schwingungsisolationssystems beinhaltet.

**31.** Verfahren nach einem der vorhergehenden Ansprüche, **dadurch gekennzeichnet, dass** das Verfahren ein Vergleichen von Datensätzen und/oder Fingerabdrücken beinhaltet.

**32.** Verfahren nach einem der vorhergehenden Ansprüche, **dadurch gekennzeichnet, dass** das Verfahren das Visualisieren der Größen und/oder der Daten und/oder der Abhängigkeiten beinhaltet

**33.** Computerprogramm mit Programmcode-Mitteln, zur Durchführung eines Verfahren nach einem der Anspruch 1 bis 33, wenn das Programm auf einem Computer ausgeführt wird.

**34.** Computerprogramm nach Anspruch 34, **dadurch gekennzeichnet, dass** das Computerprogramm mehrere Programm-Module umfasst.

**35.** Computerprogramm nach Anspruch 34 oder 35, **dadurch gekennzeichnet, dass** das Computerprogramm ein Controller spezifisches Programm-Modul zur Regelung und/oder Steuerung des Schwingungsisolationssystem umfasst.

**36.** Computerprogramm nach einem der Ansprüche 34 bis 36, **dadurch gekennzeichnet, dass** das Controller-Modul diagnostische Fähigkeiten in bezug auf das Schwingungsisolationssystem beinhaltet.

**37.** Computerprogramm nach einem der Ansprüche 34 bis 37, **dadurch gekennzeichnet, dass** das Controller-Modul zur Erzeugung und Einspeisung von Anregungssignalen im Controller ausgelegt ist.

**38.** Computerprogramm nach einem der Ansprüche 34 bis 38, **dadurch gekennzeichnet, dass** das Controller-Modul eine Befehls getriebene Schnittstelle umfasst.

**39.** Computerprogramm nach einem der Ansprüche 34 bis 39, **dadurch gekennzeichnet, dass** das Computerprogramm benutzerbezogene Funktionsmodule, insbesondere zur Kommunikation und/oder Steuerung des Controller-Moduls und/oder des Controllers umfasst.

**40.** Computerprogramm nach einem der Ansprüche 34 bis 40, **dadurch gekennzeichnet, dass** die Funktionsmodule Programmwerkzeuge zur Installation und/oder zur und/oder Visualisierung und/oder Diagnose und/oder zur Regelkreisabstimmung und/oder zur Controllerfunktionsüberwachung beinhalten.

**41.** Vorrichtung, insbesondere zur Durchführung eines Verfahrens nach den Ansprüchen 1 bis 33 und insbesondere zur Ausführung eines Computerprogramms nach den Ansprüchen 34 bis 41, umfassend:
- eine Schwingungsisolationseinrichtung, auf der ein Isolationskörper angeordnet werden kann, welche
- ein oder mehrere zum schwingungsisolierenden Betrieb angeordnete Komponenten, insbesondere Sensoren und/oder Aktoren, umfasst, die mit einer Regelund/oder Steuereinrichtung derart zusammenwirken, dass wenigstens ein für das Schwingungsisolationssystem charakterischer Fingerabdruck-Datensatz bereitstellbar ist
- **Mittel zum Vergleichen von zumindest eines Teils eines Soll-Fingerabdrucks mit einem Ist-Fingerabdruck,**
- **Mittel zum Bewerten des Zustandes des Schwingungsisolationsystems auf der Basis spezifischer Abweichungen zwischen dem Soll- und dem Ist-Fingerabdruck.**

**42.** Vorrichtung nach Anspruch 42, **dadurch gekennzeichnet, dass** die Regel- und/oder Steuereinrichtung modular aufgebaut ist.

**43.** Vorrichtung nach Anspruch 42 oder 43, **dadurch gekennzeichnet, dass** die Regel- und/oder Steuereinrichtung eine Controller-Einheit und/oder benutzerorientierte Funktionseinheiten umfasst.

**44.** Vorrichtung nach Anspruch 42 bis 44, **dadurch gekennzeichnet, dass** die Funktionseinheiten Einheiten zur Installation und/oder zur und/oder Visualisierung und/oder Diagnose und/oder zur Regelkreisabstimmung und/oder zur Contollerfunktionsüberwachung beinhalten.

**45.** System zur Erfassung eines Schwingungsisolationssystems **gekennzeichnet durch** eine Verfahren und/oder eine Vorrichtung und/oder ein Computerprogramm nach einem der vorhergehenden Ansprüchen.
